# EUROPEAN PATENT APPLICATION

(11) **EP 1 256 599 A1**
(43) Date of publication of application: **13.11.2002**
(21) Application number: 02253230.3
(22) Date of filing: 08.05.2002
(51) Int. Cl.: C08K 3/22, C08L 9/06, B60C 1/00

(54) **Rubber composition and tire comprising the same**

(30) Priority: 10.05.2001 JP 2001139815
(71) Applicant: Sumitomo Chemical Company, Limited, Chuo-ku Osaka 541-8550 (JP)
(72) Inventor: Nippa, Satoru, Niihama-shi, Ehime (JP)
(74) Representative: Cresswell, Thomas Anthony

(57) **Abstract**

A rubber composition useful for a tire is provided. The composition comprises 100 parts by weight of a rubber comprising about 70% by weight or more of a styrene-butadiene rubber based on the rubber, the styrene-butadiene rubber having a styrene content of about 20% by weight to about 60% by weight based on the styrene-butadiene rubber; 5 to 100 parts by weight of a boehmite; 0 to 100 parts by weight of a silica having a BET specific area of from about 130 m²/g to about 300 m²/g; and 5 to 200 parts by weight of a carbon black. The tire comprising the rubber composition is excellent in fuel consumption, wet traction and wear resistance.

## Description

### BACKGROUND OF THE INVENTION

### Field of the invention

The present invention relates to a rubber composition and a tire comprising the same. More particularly, the present invention relates to a rubber composition which can provide a tire having excellent braking performance and wet traction, having a small rolling resistance and having an excellent wear resistance, and relates to a tire comprising the rubber composition.

### Related art of the invention

Recently, the properties of a tire are demanded to be more diverse and sophisticated in response to a global trend toward environmental protection as well as in response to a demand for further improved automobile performance. Among such demanded properties, the combination of three items, i.e., "low fuel consumption (corresponding to low rolling resistance)", "wear resistance" and "wet traction" is called a "magic triangle" and has been emphasized to be improved while being well-balanced. It is considered that, among these items, the wet traction is an index of braking performance and running stability on a wet road, while fuel consumption with regard to a tire corresponds to rolling resistance of the tire.

It has been proposed that, as to the demanded properties described above, the low fuel consumption and the wet traction may be improved without reducing the wear resistance in a method of filling a silica into a tread rubber (for example, as in Japanese Patent Application Laid-Open No. (JP-A-) 3-252431 (corresponding to US-5,409,969), JP-A-6-248116 and JP-A-8-225684 (corresponding to US-5,717,016)). However, this method of filling a silica leads to reduction in storage elasticity of the resulting tire, which results in problems such as reduction in a dry traction thereof. Although it has been proposed that filling more silica may solve the problem of the reduction in the dry traction, new problems may arise such that processability of the tire tread rubber deteriorates by increasing the filling amount of the silica, since the whole amount of the fillers increases too much in the resulting tire.

A rubber composition containing an inorganic compound other than a silica as filler has been also proposed. For example, a rubber composition which is obtained by filling a carbon black and an inorganic compound powder other than a silica into a tread rubber is proposed in JP-A-7-149950. This rubber composition may be free from the adverse effect on the processability (observed frequently when a large amount of a silica is filled) and may produce a tire having a certain degree of the wet traction. However, the wear resistance of the rubber composition is insufficient. For improving the wear resistance, a rubber composition containing an aluminum hydroxide with a particle size of 0.8 µm is proposed in JP-A-2000-204197 (corresponding to EP-A-1,000,965). However, the wear resistance of this rubber composition is also insufficient, and is desired to be further improved.

### SUMMARY OF THE INVENTION

An objective of the present invention is to provide a rubber composition which can provide a tire having an improved wear resistance while maintaining a low fuel consumption and a wet traction, as well as to provide such a tire itself.

The inventor of the present invention has investigated fillers which can be used in rubber compositions and has finally accomplished the present invention.

The present invention provides a rubber composition comprising
(i) 100 parts by weight of a rubber containing about 70 % by weight or more of a diene-type synthetic rubber based on the rubber containing the diene-type synthetic rubber;
(ii) 5 to 100 parts by weight of a boehmite;
(iii) 0 to 100 parts by weight of a silica having a BET specific surface area of from about 130 m²/g to about 300 m²/g; and
(iv) 5 to 200 parts by weight of a carbon black.

Also, the present invention provides a rubber composition comprising
(i) 100 parts by weight of a rubber containing about 70 % by weight or more of a styrene-butadiene rubber based on the rubber, the styrene-butadiene rubber having a styrene content of about 20 % by weight to about 60 % by weight based on the styrene-butadiene rubber;
(ii) 5 to 100 parts by weight of a boehmite;
(iii) 0 to 100 parts by weight of a silica having a BET specific surface area of from about 130 m²/g to about 300 m²/g; and
(iv) 5 to 200 parts by weight of a carbon black.

Further, the present invention provides a tire comprising any of the above-described rubber compositions.

Moreover, the present invention provides a method of using any of the above-described rubber compositions as a tire.

### DESCRIPTION OF THE INENTION

A rubber composition in the present invention comprises a rubber which contains about 70 % by weight or more of a diene-type synthetic rubber, based on the rubber containing the diene-type synthetic rubber. When the amount of the diene-type rubber in the rubber containing the diene-type synthetic rubber is less than about 70 % by weight, it may be difficult to obtain a tire having a satisfactory wet traction. Examples of the diene-type synthetic rubber include a styrene-butadiene rubber, polybutadiene rubber, polyisoprene rubber and the like. Any of the rubbers may be employed alone or in combination of two or more thereof. The diene-type synthetic rubber is preferably a styrene-butadiene rubber, and is more preferably a styrene-butadiene rubber comprising about 20 % (included) by weight to about 60 % (included) by weight of styrenic components based on the diene-type synthetic rubber. When a styrene-butadiene rubber containing styrenic components in an amount of less than about 20 % by weight is utilized, wet traction of the resulting tire tends to reduce. On the other hand, when a styrene-butadiene rubber containing styrenic components in an amount of more than about 60 % by weight is utilized, the rigidity of the resulting rubber composition tends to increase and the wear resistance and the wet traction of the resulting tire may reduce.

Most preferably, a rubber composition in the present invention comprises, as a rubber component, a styrene-butadiene rubber having a styrene content of about 20 % by weight to about 60 % by weight based on the styrene-butadiene rubber. A tire made from such a composition has a satisfactory wet traction.

A rubber composition in the present invention comprises a boehmite. The boehmite may be one of alumina hydrates (i.e., aluminum hydroxide), of which crystal structure determined by an X-ray diffraction analysis is that of a boehmite or pseudo-boehmite. The boehmite used in the present invention may have a mean primary particle size of about 100 nm or less. The boehmite (aluminum hydroxide) preferably has a mean primary particle size of about 1 nm or more. Also, the boehmite preferably has a mean primary particle size of about 50 nm or less, and more preferably about 10 nm or less. The mean primary particle size of the boehmite can be expressed as a Feret's diameter. The Feret's diameter can be obtained by sandwiching a particle in the vision of a transmission electron microscope between two parallel lines in a certain direction traversing the vision and measuring the distance between the parallel lines (see, for example, Particle Engineering Handbook, page 4, published by ASAKURASHOTEN in 1965). The boehmite utilized in the present invention may be represented typically by Chemical Formula Al₂O₃·H₂O, and preferably has a crystal size in the direction perpendicular to (120) lattice plane of boehmite of about 1 nm to about 30 nm. When the crystal size is less than about 1 nm, a cohesive strength between the primary particles of boehmite tends to increase, which may result in a difficulty in dispersing in a rubber. On the other hand, when the crystal size exceeds about 30 nm, it may be difficult to obtain a highly wear-resistant rubber composition. The crystal size can be calculated by examining (120) lattice plane of boehmite for a value of half peak width using an X-ray diffraction profile, followed by applying the values to Scherrer's equation.

In the present invention, the above-described boehmite may be used in an amount of 5 parts by weight or more, and preferably 10 parts by weight or more, based on 100 parts by weight of the rubber described above. Also, the boehmite may be used in an amount of 100 parts by weight or less, and preferably 80 parts by weight or less, based on 100 parts by weight of the rubber. When the amount of the boehmite per the rubber departs from the above range, it may be difficult to obtain a rubber composition which is suitable for a tire exhibiting a low fuel consumption, high wear resistance and high wet traction. For example, when the amount of the boehmite exceeds 100 parts by weight, the wear resistance of the resulting tire may reduce.

It is not clear why a boehmite can contribute to provide a rubber composition suitable for a tire having a high wear resistance while maintaining a low fuel consumption and a high wet traction. It is supposed that a smaller particle size and a smaller distribution of the particle size of a boehmite (than other alumina hydrates such as a gibbsite) may contribute to attain the above advantages.

A boehmite employed in the present invention can be obtained, for example, by hydrolysis of an aluminum alkoxide, neutralization of an aluminum salt such as sodium aluminate, re-hydration of an activated alumina such as a ρ alumina, hydrolysis of an aluminum salt such as aluminum nitrate in an supercritical water, or the like. A boehmite prepared by any of the processes listed above may also be matured by a hydrothermal treatment. In these processes, the crystal size of a boehmite can be controlled. For example, these processes may consistently provide a boehmite having a mean primary particle size of from about 1 nm to about 100 nm and a crystal size of from about 1 nm to about 30 nm in the direction perpendicular to (120) lattice plane.

In a rubber composition of the present invention, a silica is optionally contained. The silica can be represented by Chemical Formula SiO₂ and may have a BET specific surface area of from about 130 m²/g to about 300 m²/g. When the BET specific surface area of the silica is less than about 130 m²/g, it may be difficult to obtain a rubber composition having a sufficient elastic modulus, which may result in, when employed in a tire, wear resistance of the resulting tire tends to be insufficient. On the other hand, when the BET specific surface area exceeds about 300 m²/g, the processability of the rubber composition may reduce. As a result, the silica may be dispersed poorly in the rubber composition, which results in an insufficient wear resistance of the resulting tire. The amount of the silica may be 0 to 100 parts by weight based on 100 parts by weight of the rubber described above. Preferably, a silica produced by a vapor phase process, a wet process (for example, a sedimentation process) or the like is utilized.

In a rubber composition of the present invention, a carbon black may be contained. The carbon black preferably has a BET specific surface area of from about 80 m²/g to about 280 m²/g. When the BET specific surface area of the carbon black is less than about 80 m²/g, wear resistance of the resulting rubber composition may reduce. On the other hand, when the BET specific surface area exceeds about 280 m²/g, processability of the rubber composition may reduce. The amount of the carbon black may be 5 to 200 parts by weight based on 100 parts by weight of the. rubber described above. When the amount of the carbon black is less than 5 parts by weight, reinforcing effect of the carbon black may be insufficient and also wear resistance of the resulting rubber composition may be insufficient. On the other hand, when the amount of the carbon black exceeds 200 parts by weight, the processability of the rubber composition may reduce.

A rubber composition in the present invention may have index Y/X of about 0.1 or less (and preferably about 0.07 or less, and more preferably about 0.04 or less), which can be calculated from mean value X and standard deviation value Y of a signal intensity in a spectrum of aluminum in boehmite contained in the rubber composition, the spectrum being determined using an X-ray microanalyzer (hereinafter, referred to as "EPMA"). The spectrum of the aluminum can be obtained in a spectral line analysis using EPMA by subjecting the sectional area of the rubber composition to a beam scanning and analyzing the spectral line. Index Y/X may reflect the dispersibility of the boehmite in the rubber composition. A larger index Y/X indicates localization (i.e. , poor dispersibility) of A1 element (corresponding to boehmite) in a rubber matrix (i.e., rubber composition), while a smaller index Y/X indicates uniform dispersion (i.e., a good dispersibility) of A1 element. A longer beam scanning distance in an EPMA measurement can reflect the boehmite dispersion state over a larger region in a rubber composition. The scanning distance is preferably about 100 µm or longer, and more preferably about 200 µm or longer.

A rubber composition in the present invention can be produced, for example, by a method in which an emulsion of a rubber component containing 70 parts by weight or more of a diene-type synthetic rubber is mixed with a boehmite slurry, rubber particles and boehmite particles in the resulting suspension are allowed to coprecipitate, and then the obtained precipitate is separated from the suspension. Alternatively, a rubber composition in the present invention can be produced so as to have a desired amount of boehmite by preparing a styrene-butadiene rubber with high boehmite content by the method described above and diluting the prepared styrene-butadiene rubber with other rubbers.

In the methods described above, the mixing of the rubber emulsion with the boehmite slurry is preferably conducted under the conditions that the pH of the rubber emulsion is substantially similar to the pH of the boehmite slurry, and the difference between the former and latter pHs is preferably about 1 or less, more preferably about 0.5 or less. For example, such controlling of pH is conducted by a method in which the pH of the boehmite slurry is adjusted at 4 to 9 and then the rubber emulsion having positive surface potential at the pH thus adjusted is added to the boehmite slurry; by a method in which the pH of the boehmite slurry is adjusted at 10 to 12 and then the rubber emulsion having negative surface potential at the pH thus adjusted is added to the boehmite slurry; or the like.

In addition, the mixing of the rubber emulsion with the boehmite slurry is preferably conducted under the conditions that the surface potential of the rubber has the same symbol as that of the boehmite in the resulting mixture. For example, such controlling of the surface potential symbol is conducted by a method in which the pH of the rubber emulsion or the pH of the boehmite slurry is adjusted; by a method in which the pH of the rubber emulsion and the pH of the boehmite slurry are adjusted; by a method in which the boehmite is treated with an anionic regent such as sodium hexametaphosphate and sodium polycarboxylate to impart the surface of the boehmite with a negative potential; by a method in which the boehmite is treated with an cationic regent such as diallylamine, acrylamide and ammonium hexametaphosphate to impart the surface of the boehmite with a positive potential; or the like.

In the mixing of the rubber emulsion with the boehmite slurry, an apparatus capable of mixing the both components uniformly is preferably employed. Such a mixing apparatus should be selected depending on the conditions, since the resulting mixture changes in its viscosity depending on the solid content, the pH and/or additives optionally added thereto. When the viscosity of the mixture is low, a general-purpose apparatus having a stirring blade can be employed. A homogenizer or a homojetter may also be used, if necessary. When the viscosity of the mixture is high, a kneader or the like is preferably used. Into the mixture of the rubber emulsion and the boehmite slurry, additives such as an extending oil (sometimes referred to as process oil), antioxidant, anti-aging agent, stearic acid, zinc oxide and wax, vulcanizing agent such as sulfur and/or vulcanization promoter may also be added.

A mixture obtained by mixing the rubber emulsion with the boehmite slurry may be separated from the suspension after allowing the rubber and the boehmite to coprecipitate. The coprecipitation can be accomplished by adding an aqueous solution of a salt such as sodium chloride for effecting a salting out, an aqueous solution of an acid or alkali for changing the pH of the mixture, an aqueous solution of a polymer flocculating agent such as a polyacrylamide, or a combination thereof. For example, such coprecipitation can be conducted by a method in which a saturated aqueous solution of sodium chloride is added to and is mixed with the mixture (of the rubber emulsion with a boehmite) having a pH of from 10 to 12 and then the resulting mixture is added dropwise into a sulfuric acid having a pH of about 4; by a method in which the mixture having a pH of from 10 to 12 is admixed continuously with a sulfated acidic solution containing a polymer flocculating agent; or the like. The polymer flocculating agent allows the rubber and the boehmite in the mixture to form a flock, which enables an efficient solid-liquid separation thereof. The solid-liquid separation may be conducted, for example, by a filtration at atmospheric pressure, in vacuum or under pressure: by a centrifugation; or the like.

A rubber composition obtained after a solid-liquid separation may be dried, if necessary. It may be dried, for example, by a continuous material transportation drier such as an aerating band drier and tunnel drier; by a material stirring drier such as a groove stirring drier and kneading drier; or the like. The drying temperature may be in the range of from about 50°C to about 130°C.

The rubber composition obtained after a solid-liquid separation may contain a boehmite uniformly dispersed therein. This rubber composition can be utilized as a master batch having an increased boehmite content. The rubber composition may be supplemented, if necessary, with a vulcanizing agent, vulcanization promoter, vulcanization aid, vulcanization retardant, anti-aging agent, softener, adhesive, filler other than the boehmite, extender and/or colorant. The rubber composition with such suppliment(s) may be kneaded and subjected to a press vulcanization, transfer molding vulcanization, injection molding vulcanization or extrusion continuous vulcanization, whereby providing a vulcanized rubber composition. A product such as a tire can be produced by a method in which the vulcanized rubber composition is mixed with a master batch obtained as described above, a vulcanizing agent and a vulcanization promoter to obtain a mixture thereof, and the mixture is molded and then is vulcanized.

A rubber composition in the present invention is employed preferably in automobile, motorbike and lorry tires, and is recommended to be employed especially in a tire tread. In addition, the rubber composition can be used in other applications such as buffer materials, belts, foams, films, carpet linings, electric cord coverings and balls.

A tire of the present invention can be produced by a method employed for an ordinary tire except for using a rubber composition described above as its starting material. For example, the tire of the present invention may be produced by bonding the rubber composition of the present invention onto the tread surface of a radial tire and placing the tire in a vulcanization press mold, followed by vulcanization with heating.

According to the present invention, a tire which is improved in terms of the low fuel consumption, the wet traction and the wear resistance is provided as well as a rubber composition employed preferably in such a tire.

The invention being thus described, it will be apparent that the same may be varied in many ways. Such variations are to be regarded as within the spirit and scope of the invention, and all such modifications as would be apparent to one skilled in the art are intended to be within the scope of the following claims.

The entire disclosure of the Japanese Patent Application No. 2001-139815 filed on May 10, 2001 indicating specification, claims and summary, are incorporated herein by reference in their entirety.

### EXAMPLES

The present invention is described in more detail by reference to the following Examples, which should not be construed as a limitation upon the scope of the present invention.

### Example 1

Into a glass container, 286 g of a boehmite slurry obtained by hydrolyzing an aluminum alkoxide (mean primary particle size: 5 nm, crystal size in the direction perpendicular to (120) lattice plane: 5nm, solid content: 7 % by weight) is added, is adjusted to have a pH of 10.7, and is heated to 65°C, to obtain a slurry. Into the slurry, 410 g of a styrene-butadiene rubber (SBR) latex (styrene content: 35 % by weight, solid content: about 25 % by weight, surface potential symbol: negative, pH ; 10.7, manufactured by SUMITOMO CHEMICAL Co., Ltd.) having a temperature of 65°C is added, followed by being stirred at 600 rpm. Into the resulting mixture, while still being stirred, 260 ml of aqueous NaCl solution (25 % by weight), 0.2 g of an anti-aging agent (trade name: Antigene 6C, manufactured by SUMITOMO CHEMICAL Co., Ltd.) and 37.5 g of an extending oil (trade name: Fukkol Aromax 3, manufactured by FUJIKOSAN) are added in this order, followed by being mixed with each other, to obtain a viscous boehmite-SBR mixture.

Separately, 1.85 L of water, 337 ml of aqueous NaCl solution (25 % by weight), 269 ml of 0.1 N sulfuric acid and 0.44 g of a flocculating agent (trade name: Sumirez TE-5, manufactured by SUMITOMO CHEMICAL Co., Ltd.) are mixed with each other and are heated to 65°C. Into the obtained mixture at 65°C, while being stirred at 600 rpm, the boehmite-SBR mixture obtained above is added dropwise using a dripping funnel to effect a cohesion, whereby obtaining a slurry. The dropwise addition is performed while adding 0.1 N sulfuric acid to the mixture so as to adjust the pH of the mixture at 3.6 to 4. After the dropwise addition, the slurry is stirred for 10 minutes, and is subjected to a solid-liquid separation using a vacuum filtrating device, to obtain a solid therein. The solid is washed with water having a temperature of 80°C in an twice amount as much as that of the solid, and is then crushed into pieces of 1-cm³ cubes, followed by being dried in an oven at 80°C.

In a mill (trade name: LABOPLASTMILL, Model: 20-200C, blade: B-75, manufactured by Toyoseiki Seisakusho Co., Ltd.), 40 g of the resultant dried material is placed is placed, and is kneaded at 105°C with 80 rpm, while adding 5 g of a silica (BET specific surface area: 200 m²/g) and 17.8 g of a carbon black (BET specific surface area: 150 m²/g). Furthermore, 0.3 g of a promoter (trade name: Soxinol CZ, manufactured by SUMITOMO CHEMICAL Co., Ltd.), 0.3 g of a promoter (trade name: Soxinol D, manufactured by SUMITOMO CHEMICAL Co., Ltd.), 0.42 g of a sulfur, 0.6 g of a zinc oxide, 0.6 g of a stearic acid, 0.45 g of an anti-aging agent (trade name: Antigene 3C, manufactured by SUMITOMO CHEMICAL Co., Ltd.) and 0.45 g of a wax (trade name: SUNNOC N, manufactured by OUCHISHINKO Chemical Industrial Co., Ltd.) are added thereto, and the resulting mixture is kneaded for 5 minutes, to obtain a non-vulcanized rubber composition. The non-vulcanized rubber composition is vulcanized and is molded using a heating press for 20 minutes at 170°C, to obtain a vulcanized composition.

The sectional area of the obtained vulcanized rubber composition is examined for an aluminum characteristic X-ray intensity by scanning a beam under the conditions that the acceleration voltage is 10 kV, the absorption current is 0.01 µA, the beam diameter is 10 µmϕ and the scanning distance is 400 µm, whereby obtaining mean value X and standard deviation value Y of the X-ray intensity data at all scanning points, from which index Y/X is calculated.

### Example 2

The same procedure as in Example 1 is conducted except that the amount of the boehmite slurry is changed to 1430 g, to obtain a vulcanized rubber composition.

### Example 3

The same procedure as in Example 1 is conducted except that a boehmite slurry in which mean primary particle size of the boehmite therein is 13 nm and the solid content is 7 % by weight is used, to obtain a vulcanized rubber composition.

### Example 4

A tread surface of a radial tire called Green Tire is bonded with each of the non-vulcanized rubber composition obtained in Examples 1 2 and 3, and then is placed in a vulcanizing press mold, where it is heated and is vulcanized, to obtain a tire.

## Claims

1. A rubber composition comprising
(i) 100 parts by weight of a rubber comprising about 70% by weight or more of a styrene-butadiene rubber based on the rubber, the styrene-butadiene rubber having a styrene content of about 20% by weight to about 60% by weight based on the styrene-butadiene rubber;
(ii) 5 to 100 parts by weight of a boehmite;
(iii) 0 to 100 parts by weight of a silica having a BET specific surface area of from about 130 m²/g to about 300 m²/g; and
(iv) 5 to 200 parts by weight of a carbon black.

2. A composition according to claim 1, wherein rubber (i) is a styrene-butadiene rubber having a styrene content of about 20% by weight to about 60% by weight based on the styrene-butadiene rubber.

3. A composition according to claim 1 or 2, wherein the boehmite has a mean primary particle size of about 100 nm or less.

4. A composition according to any one of claims 1 to 3, wherein the crystal size of the boehmite in the direction perpendicular to the (120) lattice plane of the boehmite is about 1 nm to about 30 nm.

5. A composition according to any one of claims 1 to 4 which has an index Y/X of about 0.1 or less, calculated from the mean value X and standard deviation value Y of signal intensity in a spectrum of aluminum in the composition, the spectrum being determined in a spectral line analysis with an X-ray microanalyzer.

6. A composition according to any one of claims 1 to 5 in shaped form.

7. A vulcanized rubber composition obtainable by vulcanizing a composition according to any one of claims 1 to 6.

8. A tire comprising a rubber composition according to any one of claims 1 to 7.

9. A tire according to claim 8 comprising a rubber composition according to any one of claims 1 to 7 as a tread material.

10. Use of a rubber composition according to any one of claims 1 to 7 as a tire material.
